# EUROPÄISCHE PATENTSCHRIFT

(11) **EP 0 939 044 B1**
(45) Veröffentlichungstag und Bekanntmachung des Hinweises auf die Patenterteilung: **12.11.2003**
(21) Anmeldenummer: 99103198.0
(22) Anmeldetag: 18.02.1999
(51) Int. Cl.: B65G 47/84

(54) **Flaschengreifer**
Bottle gripper
Pince de bouteille

(30) Priorität: 26.02.1998 DE 19808058
(43) Veröffentlichungstag der Anmeldung: 01.09.1999
(73) Patentinhaber: Kronseder, Hermann, D-93086 Wörth (DE)
(72) Erfinder: Kronseder, Hermann, D-93086 Wörth (DE)
(74) Vertreter: Grünecker, Kinkeldey, Stockmair & Schwanhäusser Anwaltssozietät

(56) Entgegenhaltungen:
- EP-A- 0 795 500
- DE-A- 19 542 518

## Beschreibung

Die Erfindung betrifft eine Greifvorrichtung für Flaschen, mit zwei Greifarmen, die mit einem Steuernocken in eine Halteposition oder eine Löseposition bringbar sind, indem der Steuernocken mit einer an jedem Greifarm ausgebildeten Anlagefläche zusammenwirkt.

Greifvorrichtungen für Flaschen sind in vielen verschiedenen Ausführungsformen bekannt. Sie dienen dem Zweck, die Flaschen, beispielsweise in Abfüllanlagen, beim Transport durch die einzelnen Stationen zu halten. Eine an die Greifvorrichtung typischerweise gestellte Anforderung liegt darin, daß sie die Flaschen zuverlässig halten können muß, auch wenn sie beispielsweise im Bereich eines Transportsternes eingesetzt wird, wo die Flaschen umgelenkt werden und deshalb Fliehkräfte der Haltekraft entgegenwirken. Zum anderen sollten die Greifvorrichtungen auch in der Lage sein, Flaschen unterschiedlicher Durchmesser aufnehmen zu können, damit die Anlagen nicht jedesmal, wenn ein anderer Flaschentyp verarbeitet werden soll, aufwendig umgestellt werden müssen.

Um diesen Anforderungen gerecht zu werden, wird in der EP-A- 0 795 500 eine gattungsgemäße Greifvorrichtung beschrieben, bei der jeder Greifarm zweiteilig ausgebildet ist, der Steuernocken gegen eine Anlagefläche drückt, und einen Teil des Greifarmes gegen den anderen Teil über ein verformbares Federelement beaufschlagt. Diese Greifvorrichtung arbeitet zuverlässig und paßt sich insbesondere auch in weiten Bereichen unterschiedlichen Flaschendurchmessern an; sie ist jedoch hinsichtlich der Konstruktion (zweiteilige Ausbildung jedes Greifarmes) aufwendig.

Aus dem DE-U- 297 12 066 ist eine Greifvorrichtung bekannt, bei der jeder Greifarm eine die Schwenkachse bildende Vierkantwelle aufweist, deren Drehbewegung über elastische Puffer auf den zugeordneten Greifarm übertragen wird. Auch hier ist der konstruktive Aufwand relativ groß.

Ausgehend von diesem Stand der Technik liegt der Erfindung die Aufgabe zugrunde, eine Greifvorrichtung der eingangs genannten Art anzugeben, die mit einfachen Mitteln verwirklicht werden kann und trotzdem eine hohe Gebrauchsdauer hat und in weiten Bereichen unterschiedlichen Flaschendurchmessern anpaßbar ist.

Gelöst wird diese Aufgabe durch eine Greifvorrichtung mit den Merkmalen des Anspruchs 1 und alternativ mit einer Greifvorrichtung mit den Merkmalen des Anspruchs 10.

Dadurch, dass der Steuernocken mit an jedem Greifarm ausgebildeten Anlageflächen zusammenwirkt, die entweder Bestandteil eines elastischen Kissens sind oder als biegbar angeordnete Blattfeder verwirklicht sind, kann bei Betätigung des Steuemockens das elastische Kissen bzw. die Blattfeder durch Zusammenwirken des Steuernockens mit der Anschlagfläche mehr oder weniger stark zusammengedrückt bzw. verformt werden, so dass sich eine einfache Anpassung an unterschiedliche Flaschendurchmesser sicherstellen lässt. Die Konstruktion ist darüber hinaus einfach. Dadurch, dass das elastische Kissen bzw. die Blattfeder jeweils in dem jeweiligen Greifarm aufgenommen ist, entfällt eine zweiteilige Ausbildung des Greifarms, wie im Stand der Technik erforderlich.

Durch die Betätigung mittels eines gemeinsamen Steuemockens ist die Konstruktion insgesamt einfach. Sie funktioniert über lange Gebrauchsdauer einwandfrei.

Bei der Lösung mit der Blattfeder bildet die Blattfeder mit ihrer einen Seite die Anlagefläche, wobei ihr Biegehub zum Anpassen der Greifvorrichtung an unterschiedliche Flaschendurchmesser nutzbar ist. Diese Ausführungsform besteht nur aus wenigen Teilen. Im Betätigungsbereich können die Greifarme schlank ausgebildet werden.

Bei der Lösung mit dem elastomeren Kissen ist das Kissen formschlüssig und austauschbar in einer Aufnahme in jedem Greifarm gehalten. Mit dieser Maßnahme ist sichergestellt, dass das Kissen zuverlässig in den Greifarmen positioniert bleibt. Es besteht dadurch die Möglichkeit, jedes Kissen bei Beschädigung oder bei sich nach langem Gebrauch einstellenden Verschleiß einfach auszuwechseln. Es besteht auch die Möglichkeit, für stark unterschiedliche Flaschengrößen Kissen unterschiedlicher Stärke einzusetzen.

Das Kissen besteht aus elastomerem Material. Je nachdem, welche Greifkräfte aufgebracht werden müssen, kann mittels einer geeigneten Materialwahl für das Kissen eine entsprechende Einstellkraft sichergestellt werden. Elastomeres Gummimaterial hat sich hierfür als besonders geeignet erwiesen.

Insbesondere, wenn die auf dem Kissen angeordnete Anlagefläche aus verschleißarmem Material besteht, wie z.B. einem Blech oder dergl., kann eine sehr lange Standzeit sichergestellt werden, weil der Steuemocken mit einer glatten, praktisch-nicht verschleißenden Fläche zusammenarbeitet.

Zweckmäßig ist in der Aufnahme an der dem Steuemocken abgewandten Seite der Blattfeder ein Verformungsfreiraum vorgesehen, den die Blattfeder hauptsächlich zum Anpassen der Greifvorrichtung an unterschiedliche Flaschendurchmesser nutzt, wenn der Steuemocken in die Halteposition verdreht ist.

Dabei kann es zweckmäßig sein, wenn die Aufnahme eine konkav gekrümmte Wandfläche aufweist. Damit läßt sich das Verformungsverhalten der Blattfeder beim Anpassen an unterschiedliche Flaschendurchmesser beeinflussen.

Wenn sich die Blattfeder im wesentlichen in Längsrichtung des Greifarms erstreckt und mit beiden Enden in taschenartigen Abstützstellen gehalten ist, wird die Blattfeder unverlierbar festgelegt. In den taschenartigen Abstützstellen findet sie die zu ihrer Biegeformung notwendige Beweglichkeit, ohne sich selbsttätig lösen zu können.

Um das Verformungsverhalten der Blattfeder im Hinblick auf gleichbleibende oder speziell abgestimmte Haltekräfte bei unterschiedlichen Flaschendurchmessem zu beeinflussen, kann hinter der Blattfeder wenigstens eine sich am Greifarm abstützende Druckfeder vorgesehen sein. Das elastische Kissen wird hier durch die Kombination der Blattfeder mit der Druckfeder gebildet, wobei die verschleißfeste und dem Steuemocken zugewandte Seite der Blattfeder die Anlagefläche bildet. Die Druckfeder kann eine Spiralfeder sein, oder ein anderer, federnder Körper.

Zweckmäßig liegt die Druckfeder an der Blattfeder an, vorzugsweise sogar mit einer Druckvorspannung. Dadurch geht eine Verformung der Blattfeder stets einher mit einer gleichzeitigen Verformung der Druckfeder. Aus diesem Aufbau resultiert auch eine Notlaufeigenschaft, falls eine der beiden in Reihe geschalteten Federn ausfallen oder geschwächt sein sollte.

Die Sicherheit der Positionierung der Blattfeder kann verbessert sein, wenn wenigstens ein Ende der Blattfeder durch einen Sicherungsstift in der Abstützstelle positioniert ist. Der Sicherungsstift kann die Blattfeder durchsetzen oder in eine im Ende der Blattfeder geformte Ausnehmung formschlüssig eingreifen. Damit sind der Blattfeder ungewollte Verlagerungsbewegungen verwehrt.

Die Druckfeder kann in einer zur gekrümmten Wandfläche offenen Aussparung des Greifarms angeordnet sein. Dies ist baulich einfach. Ferner zielt die Wirkrichtung der Druckfeder in etwa auf die Achse des Steuernockens, was für die Verformung der Druckfeder und der Blattfeder günstig ist.

Damit sich Belastungen in der Blattfeder möglichst weit verteilen, sollte die Wirklänge der Blattfeder ein Mehrfaches des maximalen Durchmessers des Steuernockens betragen.

Vorteilhaft sind die Greifarme unter Bildung eines Greifbereiches und eines Betätigungsbereiches um eine gemeinsame Schwenkachse oder zwei getrennte Schwenkachsen schwenkbar. Während in der eingangs geschilderten EP 0 795 500 jeder Greifarm um eine eigene Schwenkachse schwenkt, wird mit einer gemeinsamen Schwenkachse oder getrennten, nahe beieinanderliegenden Schwenkachsen für beide Greifarme der Vorteil erreicht, daß sich die Angriffspunkte an großen und kleinen Flaschen nur wenig unterscheiden, weil beide Greifarme beim Schwenken zum Öffnen bzw. Schließen im wesentlichen einem gemeinsamen Kreisbogen folgen. Die Konstruktion wird dadurch vereinfacht. Die Zuverlässigkeit der Vorrichtung ist erhöht.

Dabei ist bevorzugt der Abstand zwischen dem Steuernocken und der Schwenkachse kleiner als der Abstand zwischen der Schwenkachse und der gedachten Achse einer zwischen den Greifarmen aufgenommenen Flasche. Je nach Verhältnis dieser Abstände lassen sich mit relativ kleinen Stellwegen des Steuernockens relativ große Stellwege der Greifarme verwirklichen, so daß sich ausreichend große Schließkräfte für unterschiedliche Flaschendurchmesser sicherstellen lassen.

Vorteilhaft verlaufen die Greifarme im Greifbereich ihrer die Flasche ergreifenden Enden derart gekrümmt, daß sich pro Greifarm zwei im wesentlichen punktuelle Angriffsstellen ergeben, was bei verschiedenen Flaschentypen ein zuverlässiges Ergreifen sicherstellt. Bei einer konkreten Ausführungsform sind die Greifarme in die Löseposition federbeaufschlagt vorgespannt, d.h. bei Betätigung des Nockens schließen sich die Greifarme gegen die Kraft der Feder und gegen die Kraft der elastischen Kissen.

Bevorzugt sind die Greifvorrichtungen dieser Art Teil eines Transportsterns für Flaschen; sie können aber auch an anderen Stellen einer Abfüll-, Inspektions- oder einer anderen Flaschenbehandlungsanlage und auch für andere Gefäße, wie z.B. Dosen, eingesetzt werden.

Ausführungsformen des Erfindungsgegenstandes werden anhand der Zeichnung erläutert. Es zeigen:
- Fig. 1: die Draufsicht auf eine erfindungsgemäße Greifvorrichtung in der Schließstellung,
- Fig. 2: dieselbe Ansicht in einer Phase des Schließvorgangs, und
- Fig. 3: eine weitere Ausführungsform der Greifvorrichtung.

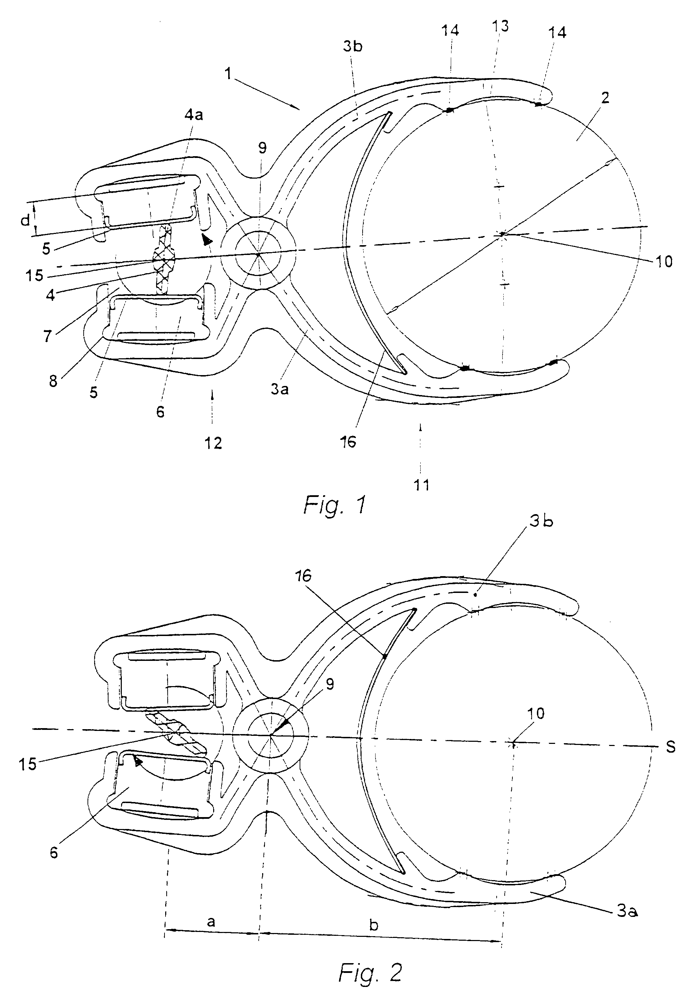

Eine in Fig. 1 dargestellte Greifvorrichtung 1 zum Ergreifen einer Flasche 2 besitzt zwei Greifarme 3a, 3b, die um eine gemeinsame Achse 9 schwenkbar nach Art einer Greifzange verbunden sind. Flaschenseitig wird ein Greifbereich 11 und auf der anderen Seite der Achse 9 ein Betätigungsbereich 12 zum Betätigen der Greifarme gebildet.

Im Betätigungsbereich greift ein von unten oder oben in nicht näher dargestellter Weise (vgl. z.B. EP 0 795 500) betätigbarer, d.h. verdrehbarer, Steuernocken 4 ein, der mit Anlageflächen 5 zusammenarbeitet. Die Anlageflächen 5 sind Teile von elastischen Kissen 6, die in im Betätigungsbereich 12 ausgebildete Aufnahmen 7 der Greifarme 3a, 3b eingesetzt sind. Die Kissen 6 bestehen z.B. aus gummielastischem Material und besitzen Ausstülpungen 8, die in entsprechende Ausnehmungen der Aufnahme 7 eingreifen. so daß die Kissen 6 einfach in die Aufnahmen eingesetzt und kraft- und formschlüssig gehalten werden. Aufgrund ihrer Elastizität lassen sie sich wieder aus den Aufnahmen 7 entnehmen.

Jedes Kissen läßt sich auf eine Dicke d komprimieren, die z.B. drei Viertel der gesamten Dicke des Kissens (vgl. Fig. 2) beträgt.

Im Greifbereich 11 sind die vorderen Enden jedes Greifarmes mit einer Krümmung 13 versehen, deren Krümmungsradius deutlich kleiner als die Krümmungsradien der Umrisse üblicherweise zu verarbeitender Flaschen 2 ist. Dadurch wird bewirkt, daß die vorderen Enden der Greifarme 3a,3b die Flaschen 2 auf jeder Seite an jeweils zwei Stellen 14 quasi punktuell ergreifen und festhalten. Dies gilt für verschiedene Flaschendurchmesser, so daß Flaschen unterschiedlichen Durchmessers sicher ergriffen werden können. In Fig. 2 ist der Abstand a zwischen der Schwenkachse 9 der Greifarme und der Schwenkachse 15 des Steuernockens 4 kleiner als der Abstand b zwischen der Flaschenachse 10 einer aufgenommenen Flasche 2 und der Schwenkachse 9. Dadurch lassen sich mit kleinen Stellwegen im Betätigungsbereich 12, d.h. mit kleinen Drehungen des Steuernockens 4, große Öffnungs- und Schließwege für die Greifarme 3a, 3b realisieren. Bevorzugt ist der Abstand b mehr als doppelt so groß wie der Abstand a. Die Flaschenachse 10, die Schwenkachse 9 und die Nockenachse 15 liegen auf der Symmetrieachse s in Fig. 2.

In der in der Zeichnung nicht dargestellten Löseposition ist der Steuernocken 4 mit seinen Steuerflügeln 4a entlang der Symmetrieachse s ausgerichtet. Ein blattfederartiges Federelement 16 drückt in dieser Position die Greifarme auseinander, so daß die Anlageflächen 5 im wesentlichen an den Seitenflächen des Steuernockens 4 anliegen. Zum Ergreifen einer Flasche wird der Steuernocken 4, z.B. im Uhrzeigersinn wie in Fig. 2 dargestellt, beaufschlagt. Die Fig. 2 zeigt eine Phase, in der sich die Greifarme bereits auf die Flasche zubewegt haben und in Anlage an die Flaschenwand gekommen sind, die elastischen Kissen 6 jedoch noch nicht nennenswert komprimiert wurden. Bei weiterer Drehung des Steuernockens 4 im Uhrzeigersinn nehmen die elastischen Kissen die in Fig. 1 dargestellte komprimierte Stellung ein, und erzeugen die Andrückkraft, mit der die Greifarme gegen die Flasche drücken.

Der Schwenkweg der Steuernocken kann im Uhrzeigersinn, z.B. bis in die in Fig. 1 gezeigte Stellung, beschränkt sein. Es ergibt sich so eine Übertotpunktstellung, wobei die Rückstellkraft der elastischen Elemente dann für eine Selbstblockierung des Steuernokkens 4 sorgt.

Zum Öffnen wird der Steuernocken 4 in der in Fig. 1 dargestellten Pfeilrichtung (entgegen Uhrzeigersinn) verdreht. Das zwischen die Greifarme 3a, 3b eingespannte Federelement 16 drückt die Greifarme auseinander.

Da die Greifarme um die gemeinsame Achse 9 schwenken und sich auf einem gemeinsamen Schwenkkreis auseinander bzw. aufeinanderzu bewegen, ergibt sich auch bei starken Unterschieden bei den Flaschendurchmessern verschiedener Flaschentypen kein wesentlicher Versatz der Angriffsstellen 14, so daß Flaschen unterschiedlicher Durchmesser zuverlässig immer an zwei Stellen pro Greifarm gehalten werden.

Die Greifvorrichtung ist insgesamt einfach aufgebaut und erlaubt eine nahezu verschleißfreie lange Benutzung bei einfacher Konstruktion und optimaler Anpaßbarkeit an verschiedene Flaschendurchmesser.

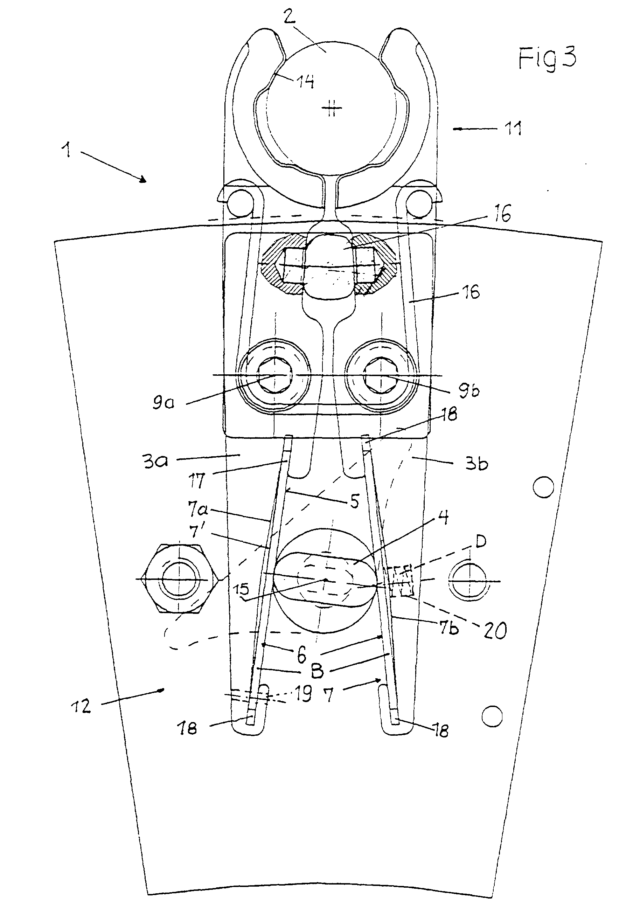

Die in Fig. 3 gezeigte Ausführungsform der Greifvorrichtung 1 zum Ergreifen der Flasche 2 umfaßt zwei Greifarme 3a, 3b, die um zwei getrennte, relativ nahebeieinander positionierte Achsen 9a, 9b nach Art einer Greifzange schwenkbar verbunden sind. Die Schwenkachsen trennen den Greifbereich 11 vom Betätigungsbereich 12.

Anstelle des gummielastischen Kissens in den Fig. 1 und 2 ist jedes Kissen 6 in Fig. 3 eine Blattfeder B, die sich in etwa in Längsrichtung des Greifarmes 3a, 3b orientiert in der Aufnahme 7 befindet. Die Blattfeder hat beispielsweise einen annähernd rechteckigen Umriß und ist mit ihren Enden 17 in taschenartigen Abstützstellen 18 positioniert, zweckmäßigerweise so, daß wenigstens ein Ende 17 beweglich bleibt. Sicherheitshalber kann wenigstens ein Ende 17 durch einen Sicherungsstift 19 gesichert sein, der entweder die Blattfeder durchsetzt oder in eine am freien Rand des Endes 17 eingeformte Ausnehmung eingreift. Zweckmäßigerweise sind alle Enden 17 auf diese Weise gesichert. Die Anlagefläche 5 für den Steuernocken 4 wird bei jeder Blattfeder B durch die dem Steuernocken 4 zugewandte Seite gebildet. An der dem Steuernocken 4 gegenüberliegenden Seite der Blattfeder ist in der Aufnahme ein Verformungsfreiraum 7' gebildet, der durch eine bei der gezeigten Ausführungsform konkav zurücktretende, z.B. gekrümmt verlaufende, Wandfläche 7a, 7b begrenzt wird.

Das Kissen 6 der Ausführungsform der Fig. 3 kann ergänzt sein durch eine an der dem Steuernocken 4 abgewandten Seite der Blattfeder B im Greifarm 3a, 3b abgestützte Druckfeder D, die in einer zur Wandfläche 7a, 7b offenen Aussparung 20 angeordnet ist. Die Druckfeder D kann eine Spiralfeder oder ein anderer federnder Körper sein. Zweckmäßigerweise liegt die Druckfeder D an der dem Steuernocken 4 abgewandten Seite der Blattfeder B an, gegebenenfalls mit Druckvorspannung.

Die Wirklänge der Blattfeder B zwischen den Abstützstellen 18 beträgt ein Mehrfaches des größten Durchmesser des Steuernockens 4. Die Tiefe des Verformungsfreiraumes 7' wird im Hinblick auf den Bereich gewählt, der durch Unterschiede der Durchmesser der zu ergreifenden Flaschen 2 gegeben ist. Der Verformungsfreiraum 7' kann tiefer oder seichter als gezeigt gestaltet werden.

Die Angriffsstellen 14 im Greifbereich 11 sind bei dieser Ausführungsform in Richtung der Krümmung der Enden der Greifarme 3a, 3b etwas länger ausgebildet als in den Fig. 1, 2. In Zusammenwirkung mit den getrennten Schwenkachsen 9a, 9b wird dennoch ein fester Griff bei unterschiedlichen Flaschendurchmessern erzielt.

Für das die Greifarme 3a, 3b in Löserichtung vorspanndende Federelement 16 sind in Fig. 3 zwei Möglichkeiten angedeutet, die alternativ oder additiv verwendet werden können. In einem Fall ist das Federelement 16 eine angenähert Omega-förmige Drahtfeder, die sich im Bereich der beiden Schwenkachsen 9a, 9b mit ihrer Beuge und mit ihren nach außen gebogenen Schenkelenden an Widerlagern der Greifarme 3a, 3b von innen her abstützt. Im anderen Fall ist das Federelement 16 ein beispielsweise elastomerer Körper, der innen zwischen die Greifarme 3a, 3b eingesetzt und dort gesichert ist und die Greifarme 3a, 3b auseinanderdrückt.

Die Blattfeder B könnte an ihrer dem Steuernocken 4 zugewandten Seite mit einer gleitfreudigen Beschichtung versehen sein.

In der in Fig. 3 gezeigten Greifstellung der Greifvorrichtung 1 befindet sich der Steuernocken in einer stabilen Übertotpunktlage. Zum Öffnen der Greifvorrichtung 1 wird der Steuernocken 4 entgegen dem Uhrzeigersinn verdreht, bis seine Hauptachse in etwa mit der Symmetrieebene der Greifvorrichtung ausgerichtet ist. Das Federelement 16 bringt die Greifvorrichtung in ihre Öffnungsstellung, die dadurch begrenzt sein kann, daß entweder die Blattfedern B an den Flachseiten des Steuernockens 4 anliegen, oder die Greifarme 3a, 3b selbst aneinander zur Anlage kommen.

Die Blattfedern B und/oder die Druckfedem D sind austauschbar. Die Greifvorrichtung 1 kann auf einer mit ihrem Umriß angedeuteten Stemplatte montiert sein, über deren Vorderrand der Greifbereich 11 übersteht.

## Patentansprüche

1. Greifvorrichtung für Flaschen, mit zwei Greifarmen (3a, 3b), die mit einem Steuernocken (4) in eine Halteposition oder eine Löseposition bringbar sind, indem der Steuemocken (4) mit einer an jedem Greifarm (3a, 3b) ausgebildeten Anlagefläche (5) zusammenwirkt,
**dadurch gekennzeichnet, dass**
die Anlagefläche Bestandteil einer an dem jeweiligen Greifarm (3a, 3b) biegbar angeordneten Blattfeder (B) ist.

2. Greifvorrichtung nach Anspruch 1, **dadurch gekennzeichnet, daß** in der Aufnahme (7) an der dem Steuemocken (4) abgewandten Seite der Blattfeder (B) ein Verformungsfreiraum (7') für die Blattfeder (B) vorgesehen ist.

3. Greifvorrichtung nach Anspruch 2, **dadurch gekennzeichnet, daß** die Aufnahme (7) - im wesentlichen über die Wirklänge der Blattfeder (B) - eine konkav gekrümmte Wandfläche (7a, 7b) aufweist.

4. Greifvorrichtung nach Anspruch 1, **dadurch gekennzeichnet, daß** sich die Blattfeder (B) im wesentlichen in Längsrichtung des Greifarms (3a, 3b) erstreckt und mit beiden Enden (17) in taschenartigen Abstützstellen (18) gehalten ist.

5. Greifvorrichtung nach Anspruch 1, **dadurch gekennzeichnet, daß** an der dem Steuemocken (4) abgewandten Seite der Blattfeder (B) wenigstens eine Druckfeder (D), vorzugsweise eine Spiralfeder, vorgesehen ist, die sich am Greifarm (3a, 3b) abstützt und zur Blattfeder (B) weist.

6. Greifvorrichtung nach Anspruch 5, **dadurch gekennzeichnet, daß** die Druckfeder (D) an der dem Steuemocken (4) abgewandten Seite der Blattfeder (B) anliegt, vorzugsweise mit Druckvorspannung.

7. Greifvorrichtung nach Anspruch 4, **dadurch gekennzeichnet, daß** zumindest ein Ende (17) der Blattfeder (B) durch einen Sicherungsstift (19) in der Abstützstelle (18) positioniert ist.

8. Greifvorrichtung nach Anspruch 5, **dadurch gekennzeichnet, daß** die Druckfeder (D) in einer in etwa zur Drehachse (15) des Steuernockens (4) ausgerichteten, zur gekrümmten Wandfläche (7a, 7b) offenen Aussparung (20) des Greifarms (3a, 3b) angeordnet ist.

9. Greifvorrichtung nach Anspruch 3, **dadurch gekennzeichnet, daß** die Wirklänge der Blattfeder (B) ein Mehrfaches des maximalen Durchmessers des Steuemockens (4) beträgt.

10. Greifvorrichtung für Flaschen, mit zwei Greifarmen (3a, 3b), die mit einem Steuernocken (4) in eine Halteposition oder eine Löseposition bringbar sind, indem der Steuernocken (4) mit einer an jedem Greifarm (3a, 3b) ausgebildeten Anlagefläche (5) zusammenwirkt und mit einem Kissen aus elastomerem Material, das in eine Aufnahme des jeweiligen Greifarmes eingesetzt ist,
**dadurch gekennzeichnet, dass**
die Anlagefläche (5) jeweils Bestandteil des elastischen Kissen (6) ist, das an dem jeweiligen Greifarm (3a, 3b) formschlüssig und austauschbar angeordnet ist.

11. Greifvorrichtung nach Anspruch 1 oder 10, **dadurch gekennzeichnet, daß** die Greifarme (3a,3b) zangenartig unter Bildung eines Greifbereiches (11) und eines Betätigungsbereiches (12) um eine gemeinsame Schwenkachse (9) oder um zwei getrennte Schwenkachsen (9a, 9b) schwenkbar sind.

12. Greifvorrichtung nach Anspruch 10, **dadurch gekennzeichnet, daß** die Kissen (6) im Betätigungsbereich (12) angeordnet sind.

13. Greifvorrichtung nach Anspruch 11, **dadurch gekennzeichnet, daß** der Abstand (a) zwischen dem Steuemocken (4) und der Schwenkachse (9, 9a, 9b) kleiner ist als der Abstand (b) zwischen der Schwenkachse (9, 9a, 9b) und der gedachten Achse (10) einer zwischen den Greifarmen aufgenommenen Flasche (2).

14. Greifvorrichtung nach Anspruch 1 oder 10, **dadurch gekennzeichnet, daß** die Greifarme (3a, 3b) im Greifbereich (11) an ihren die Flasche (2) ergreifenden Enden mit einer derartigen Krümmung (13) verlaufen, daß sich pro Greifarm (3a, 3b) zwei im wesentlichen punktuelle Angriffsstellen (14) ergeben.

15. Greifvorrichtung nach Anspruch 1 oder 10, **dadurch gekennzeichnet, daß** die Greifarme (3a, 3b) federbeaufschlagt in Richtung zur Löseposition vorgespannt sind.

16. Greifvorrichtung nach einem der Ansprüche 1 bis 15, **dadurch gekennzeichnet, daß** sie Teil eines Transportstems für Flaschen ist.

## Claims

1. Gripping device for bottles, with two gripping arms (3a, 3b), which can be brought by a control cam (4) into a holding position or a release position in that the control cam (4) cooperates with a bearing surface (5) constructed on each gripping arm (3a, 3b), **characterised in that** the bearing surface is a component of a leaf spring (B) arranged as flexible on the respective gripping arm (3a, 3b).

2. Gripping device according to claim 1, **characterised in that** in the receiver (7) on the side of the leaf spring (B) facing away from the control cam (4) a deformation clearance (7') for the leaf spring (B) is provided.

3. Gripping device according to claim 2, **characterised in that** the receiver (7) - substantially via the effective length of the leaf spring (B) - has a concavely curved wall face (7a, 7b).

4. Gripping device according to claim 1, **characterised in that** the leaf spring (B) extends substantially in the longitudinal direction of the gripping arm (3a, 3b) and is held by both ends (17) in pocket-like support locations (18).

5. Gripping device according to claim 1, **characterised in that** on the side of the leaf spring (B) facing away from the control cam (4) at least one pressure spring (D), preferably a flat coil spring, is provided, which is supported on the gripping arm (3a, 3b) and points towards the leaf spring (B).

6. Gripping device according to claim 5, **characterised in that** the pressure spring (D) rests against the side of the leaf spring (B) facing away from the control cam (4), preferably with pressure bias.

7. Gripping device according to claim 4, **characterised in that** at least one end (17) of the leaf spring (B) is positioned in the support location (18) by a securing pin (19).

8. Gripping device according to claim 5, **characterised in that** the pressure spring (D) is arranged in a recess (20) of the gripping arm (3a, 3b) orientated approximately to the axis of rotation (15) of the control cam (4) and open to the curved wall face (7a, 7b).

9. Gripping device according to claim 3, **characterised in that** the effective length of the leaf spring (B) is a multiple of the maximum diameter of the control cam (4).

10. Gripping device for bottles, with two gripping arms (3a, 3b), which can be brought by a control cam (4) into a holding position or a release position in that the control cam (4) cooperates with a bearing surface (5) constructed on each gripping arm (3a, 3b), and with a cushion made of elastomer material which is inserted into a receiver of the respective gripping arm, **characterised in that** the bearing surface (5) is in each case a component of the elastic cushion (6) arranged as form-locking and replaceable on the respective gripping arm (3a, 3b).

11. Gripping device according to claim 1 or 10, **characterised in that** the gripping arms (3a, 3b) are swivellable in the manner of tongs round a common swivel pin (9) or round two separate swivel pins (9a, 9b), forming a gripping area (11) and an actuating area (12).

12. Gripping device according to claim 10, **characterised in that** the cushions (6) are arranged in the actuation area (12).

13. Gripping device according to claim 11, **characterised in that** distance (a) between the control cam (4) and the swivel pin (9, 9a, 9b) is smaller than distance (b) between the swivel pin (9, 9a, 9b) and the imaginary axis (10) of a bottle (2) picked up between the gripping arms.

14. Gripping device according to claim 1 or 10, **characterised in that** the gripping arms (3a, 3b) run in the gripping area (11) on their ends gripping the bottle (2) at a curve (13) of such a kind that two substantially spot gripping locations (14) emerge per gripping arm (3a, 3b).

15. Gripping device according to claim 1 or 10, **characterised in that** the gripping arms (3a, 3b) are biased in the direction of the release position under spring impact.

16. Gripping device according to one of claims 1 to 15, **characterised in that** they are part of a conveyance star for bottles.

## Revendications

1. Dispositif de préhension pour bouteilles, comprenant deux bras de préhension (3a, 3b) qui peuvent être amenés par une came de commande (4) dans une position de retenue ou dans une position de déblocage, la came de commande (4) coopérant avec une surface de contact (5) réalisée sur chaque bras de préhension (3a, 3b), **caractérisé en ce que** la surface de contact fait partie d'un ressort à lame (B) disposé de façon flexible sur le bras de préhension respectif (3a, 3b).

2. Dispositif de préhension suivant la revendication 1, **caractérisé en ce qu'**un espace libre de déformation (7') pour le ressort à lame (B) est prévu dans le logement (7) sur le côté du ressort (B) opposé à la came de commande (4).

3. Dispositif de préhension suivant la revendication 2, **caractérisé en ce que** le logement (7) présente - essentiellement sur la longueur active du ressort à lame (B) - une surface de paroi (7a, 7b) de courbure concave.

4. Dispositif de préhension suivant la revendication 1, **caractérisé en ce que** le ressort à lame (B) s'étend essentiellement dans la direction longitudinale du bras de préhension (3a, 3b) et est maintenu par les deux extrémités (17) dans des emplacements d'appui (18) en forme de poches.

5. Dispositif de préhension suivant la revendication 1, **caractérisé en ce que** sur le côté du ressort à lame (B) opposé à la came de commande (4) est prévu au moins un ressort de compression (D), de préférence un ressort spiral, qui s'appuie sur le bras de préhension (3a, 3b) et est tourné vers le ressort à lame (B).

6. Dispositif de préhension suivant la revendication 5, **caractérisé en ce que** le ressort de compression (D) s'applique sur le côté du ressort à lame (B) opposé à la came de commande (4), de préférence sous précontrainte de pression.

7. Dispositif de préhension suivant la revendication 4, **caractérisé en ce qu'**au moins une extrémité (17) du ressort à lame (B) est positionnée dans l'emplacement d'appui (18) par une goupille d'arrêt (19).

8. Dispositif de préhension suivant la revendication 5, **caractérisé en ce que** le ressort de compression (D) est disposé dans un évidement (20) du bras de préhension (3a, 3b) ouvert en direction de la surface de paroi cintrée (7a, 7b), orienté à peu près vers l'axe de rotation (15) de la came de commande (4).

9. Dispositif de préhension suivant la revendication 3, **caractérisé en ce que** la longueur active du ressort à lame (B) est un multiple du diamètre maximal de la came de commande (4).

10. Dispositif de préhension pour bouteilles, comprenant deux bras de préhension (3a, 3b) qui peuvent être amenés par une came de commande (4) dans une position de retenue ou dans une position de déblocage, la came de commande (4) coopérant avec une surface de contact (5) réalisée sur chaque bras de préhension (3a, 3b) et avec un coussin en matière élastomère mis en place dans un logement du bras de préhension respectif, **caractérisé en ce que** la surface de contact (5) fait partie de chaque coussin élastique (6), qui est disposé par coopération de forme et de façon interchangeable sur le bras de préhension (3a, 3b) respectif.

11. Dispositif de préhension suivant l'une des revendications 1 et 10, **caractérisé en ce que** les bras de préhension (3a, 3b) peuvent pivoter à la manière d'une pince autour d'un axe de pivotement commun (9) ou de deux axes de pivotement séparés (9a, 9b) en formant une zone de préhension (11) et une zone de commande (12).

12. Dispositif de préhension suivant la revendication 10, **caractérisé en ce que** les coussins (10) sont disposés dans la zone de commande (12).

13. Dispositif de préhension suivant la revendication 11, **caractérisé en ce que** la distance (a) entre la came de commande (4) et l'axe de pivotement (9, 9a, 9b) est inférieure à la distance (b) entre l'axe de pivotement (9, 9a, 9b) et l'axe imaginaire (10) d'une bouteille (2) reçue entre les bras de préhension.

14. Dispositif de préhension suivant l'une des revendications 1 et 10, **caractérisé en ce que** les bras de préhension (3a, 3b) s'étendent dans la zone de préhension (11), sur leurs extrémités saisissant la bouteille (2), avec une courbure (13) telle qu'il en résulte deux emplacements d'attaque (14) essentiellement ponctuels par bras de préhension (3a, 3b).

15. Dispositif de préhension suivant l'une des revendications 1 et 10, **caractérisé en ce que** les bras de préhension (3a, 3b) sont précontraints par charge de ressort en direction de la position de déblocage.

16. Dispositif de préhension suivant l'une des revendications 1 à 15, **caractérisé en ce qu'**il fait partie d'une étoile de transport pour bouteilles.
